# FASCICULE DE BREVET EUROPEEN

(11) **EP 0 945 067 B1**
(45) Date de publication et mention de la délivrance du brevet: **20.12.2000**
(21) Numéro de dépôt: 99390005.9
(22) Date de dépôt: 25.03.1999
(51) Int. Cl.: A21B 3/13, A21C 1/08

(54) **Procédé de fabrication de blocs de pain de grandes dimensions et matériel à cet effet**
Verfahren zur Herstellung von grossen Laiben und Zubehör
Method of producing large loaves of bread and material therefor

(30) Priorité: 25.03.1998 FR 9803794
(43) Date de publication de la demande: 29.09.1999
(73) Titulaire: France Cocktail S.A., 47310 Estillac (FR)
(72) Inventeur: Denghi, Philippe, 47310 Estillac (FR)
(74) Mandataire: Ravina, Bernard

(56) Documents cités:
- DE-A- 4 132 571
- FR-A- 2 649 861
- US-A- 4 368 019

## Description

La présente invention concerne un procédé d'élaboration de blocs de pain de grandes dimensions avec une mie dense et homogène par formation d'un pâton et cuisson dudit pâton dans un moule.

Ces blocs de pain pourront ensuite être, par exemple, découpés en feuilles de grandes dimensions qui seront garnies de différents aliments puis découpées en parcelles par exemple au moyen d'une machine de découpe au jet d'eau pour la réalisation de canapés pour l'apéritif.

La fabrication de feuilles ou de tranches de pain de grandes dimensions présente de l'intérêt notamment pour faire de manière industrielle ou semi-industrielle des portions alimentaires de type canapé de petites dimensions. En effet, sur une feuille de dimension par exemple 0,4 sur 0,6m il est possible de poser à espaces réguliers des doses de produits alimentaires et ensuite de découper la feuille suivant des axes orthogonaux avec des pertes en croûtes de cuisson très limitées.

Avec les pains connus du type pains de mie ou pains anglais de dimensions plus réduites, il n'est pas possible de réaliser des feuilles ou tranches de grandes dimensions et toutes égales en dimensions. Les pertes en croûtes de cuisson sont très importantes et la fabrication de petites parcelle à partir de ces type de pains est donc moins rentable.

Un autre problème est que les procédés connus d'élaboration de pâton ne permettent pas d'obtenir une mie parfaitement homogène, adaptée au garnissage avec des aliments. Les mies traditionnelles présentent généralement des trous qui rendent le garnissage impossible et qui génèrent des pertes supplémentaires.

Le brevet FR.2 649 861 décrit un moule pour la fabrication de caisses de pain de grand volume lequel comprend une ceinture et deux couvercles, un inférieur et un supérieur, ainsi que deux grilles, une inférieure et une supérieure entre lesquelles le pain va gonfler à la cuisson. Ce système est particulièrement complexe et difficile à mettre en oeuvre dans une fabrication industrielle de part le nombre de pièces qu'il comprend et donc le nombre d'opérations nécessaires à chaque moulage et démoulage du pain. Par ailleurs, le couvercle supérieur intègre des soupapes pour évacuer la pression ce qui présente un danger si elles se trouvaient bouchées. Ces soupapes peuvent en effet facilement être bouchées par des résidus de pâte ou de farine et leur nettoyage est particulièrement fastidieux. Dans le cadre d'une fabrication industrielle et productive il est donc nécessaire de limiter les manipulations et l'entretien des moules au minimum, ceci passant par la réduction du nombre de pièces mises en oeuvre et la simplification des dispositifs.

Le brevet US 4 368 019 (THOMPSON DANIEL T) décrit une machine pour diviser de la pâte à pain et former des pâtons. Une première opération consiste à faire passer la pâte entre des rouleaux au profil dentelé afin de lui donner une forme de bande particulière apte à être découpée. La pâte est alors divisée en pâtons de taille régulière. Les pâtons tombent dans un dispositif pour être mis en forme de couronne ou de boule. Dans ce cas, la pâte est pressée par un mandrin pour lui donner une forme de couronne. Ce pressage a pour effet de tasser les constituants de la pâte de manière non homogène. Selon ce procédé, il est donc impossible d'obtenir un pain avec une mie parfaitement homogène. D'autre part, ce procédé n'est absolument pas adapté à la confection de blocs de pain de grandes dimensions.

La présente invention a pour objectif de palier aux inconvénients évoqués précédemment en proposant un procédé d'élaboration caractérisé en ce que:
- Il met en oeuvre des opérations de façonnage de la pâte visant à obtenir une mie dense et homogène.
- Il utilise un moule spécifique, facile à mettre en oeuvre et permettant d'obtenir des blocs de pain de grandes dimensions, limitant ainsi les pertes en croûtes de cuisson et permettant d'obtenir des blocs de pain de forme et de dimensions adaptées à des opérations automatisées d'élaboration de canapés pour l'apéritif.

D'autres avantages et caractéristiques apparaîtront à la lecture de la description ci-après de formes de réalisation de l'invention données à titre d'exemple non limitatifs et illustrés par les dessins joints dans lesquels:
- la figure 1 représente les différentes phases d'élaboration du pâton, de cuisson du pain dans le moule jusqu'au refroidissement du pain sur une plaque.

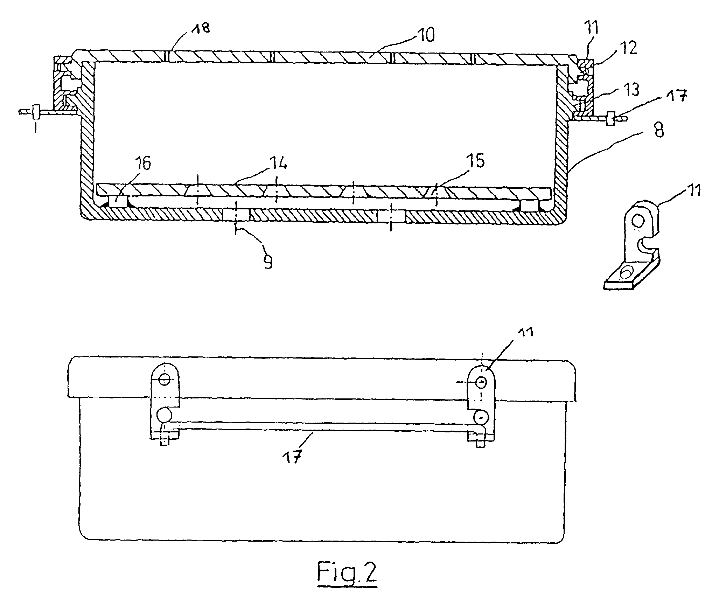

- la figure 2 représente le moule de cuisson des blocs de pain.

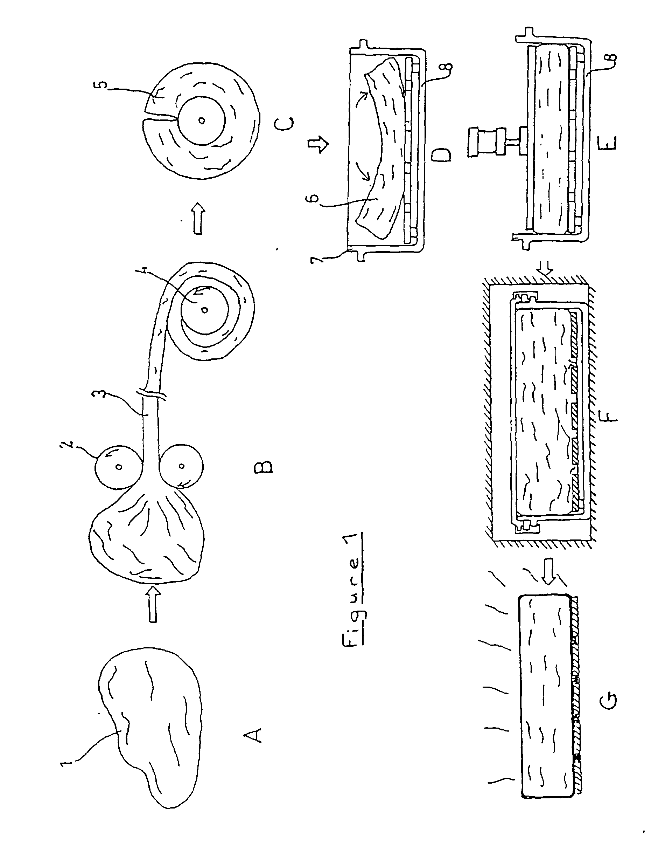

Le pâton (1) peut être de différentes natures (pain de mie, pain de seigle...), il est obtenu selon des techniques parfaitement connues de l'homme de métier (fig1A).

Le pâton (1), de poids déterminé correspondant à la réalisation d'un bloc de pain, est soumis à une ou plusieurs opérations de laminage (fig1B) entre deux rouleaux (2). Ces opérations de laminage visent à répartir parfaitement les différants constituants de la pâte: les agents levants, la farine et l'humidité contenue dans la pâte. Une pâte à pain contient environ 30% d'humidité dont l'évaporation à la cuisson en combinaison avec les agents levants crée des bulles d'air qui donnent la structure alvéolaire de la mie du pain. Une mauvaise répartition de tous ces éléments donne une mie avec des trous hétérogènes et donc impropre à recevoir des aliments. Grâce aux opérations de laminage de la présente invention, les constituants de la pâte sous l'action de compression des rouleaux (2) se trouvent parfaitement repartis dans tout le volume du pâton, la structure alvéolaire de la mie sera donc homogène.

La bande de pâte (3) obtenue en sortie du laminoir est enroulée sur un rouleau (4), tournant au fur et à mesure que la pâte se dépose dessus, jusqu'à obtention d'un cylindre de pâte (5) d'épaisseur correspondant à l'épaisseur du bloc attendu.

Le cylindre de pâte est découpé longitudinalement (fig 1C) puis déroulé pour obtenir un bloc de pâte de forme parallélépipédique (6).

Cette opération de formage du pâton à partir d'un cylindre déroulé permet de former des pâtons de formes parallélépipédiques toujours identiques. De plus, grâce à ce principe, les contraintes dans la pâte sont uniformes, il n'y a pas d'effets ponctuels de tassement ou d'étirement de la pâte qui engendreraient une mie irrégulière. En effet, pour former un bloc parallélépipédique directement à partir d'une boule de pâte, il serait nécessaire de l'étirer et de la comprimer par endroits jusqu'à obtention de la forme désirée, la levée du pain serait donc irrégulière et la mie présenterait des zones plus denses là où la pâte a été comprimée et inversement.

Le bloc de pâte est ensuite introduit dans un moule (6)(fig 1D).

Le bloc de pâte subit alors une opération de pressage (fig 1E) permettant de lui faire prendre parfaitement la forme du moule. Le pressage est assuré par une plaque faisant pression sur la pâte par l'intermédiaire d'un vérin pneumatique par exemple.

Le moule (6) est composé d'une enceinte comportant un fond et des parois latérales, formant une caisse parallélépipédique (8) ouverte en son extrémité supérieure. Le fond de la caisse est pourvu de 8 trous (9) de 50 millimètres de diamètre par exemple permettant l'évacuation de la pression lors de la levée de la pâte pendant la cuisson et facilitant le démoulage.

La caisse est fermée par un couvercle (10) afin que le pain épouse parfaitement le forme de la caisse lors de la levée de la pâte. Le couvercle (10) possède un rebord sur son contour qui s'emboîte sur les parois latérales de la caisse, permettant d'éviter qu'elles ne se déforment sous l'effet de la pression de levée de la pâte. Le couvercle est également percé de plusieurs petits trous (18) afin que les gaz s'échappent lors de la levée de la pâte.

Le couvercle (10) est fixé à la caisse (8) par l'intermédiaire de plusieurs crochets (11) répartis sur le contour du couvercle. Chaque crochet (11) est articulé autour d'un axe (12) sur le couvercle (10) et s'enclenche sur un téton (13) fixé à la caisse. Les crochets sont maintenus fermés deux à deux par une tringle (17). Cette tringle peut être une tige d'acier de diamètre 6 millimètres par exemple. Les pressions exercées par la levée de la pâte sur les parois de la caisse et le couvercle sont très importantes, le dimensionnement de ces éléments doit être effectué en conséquence. La caisse et le couvercle peuvent être réalisés en tôles inoxydables de 3 millimètres d'épaisseur, pliées et soudées.

Le fond de la caisse est recouvert par une plaque (14) percée de plusieurs trous (15).
C'est sur cette plaque que le pâton est déposé pour subir la cuisson. Afin de faciliter l'évacuation de la pression et d'éviter que la pâte n'adhère au fond de la caisse, la plaque est rehaussée par rapport au fond de la caisse par des pastilles (16) de quelques millimètres d'épaisseur, soudées au fond de la caisse. Cette plaque servira de support au pain lors de la cuisson et lors de toutes les opérations ultérieures (refroidissement, découpage...). Ces opérations sont rendues beaucoup plus faciles si le pain et la plaque sont solidarisés. Dans ce but, les trous de ladite plaque sont dimensionnés de manière à ce que la pâte puisse s'y incruster. Ces trous sont également chanfreinés sur l'envers de la plaque afin de favoriser l'accrochage de la pâte. Lors de la levée durant la cuisson, la pâte bloquée entre les parois de la caisse et le couvercle tend à se dilater et vient naturellement s'incruster dans les trous de la grille. La plaque doit être suffisamment rigide pour servir de support et de renfort au bloc de pain, elle peut être constituée d'une tôle inoxydable de 3 mm d'épaisseur, percée de trous de 2cm de diamètre.

Il est important de veiller à ce que les trous du fond de la caisse et les trous de la grille ne concordent pas de manière à éviter toute adhérence entre le pain et les parois de la caisse qui rendrait le démoulage plus difficile.

Le pâton est donc posé sur la plaque (14) à l'intérieur de la caisse (8) et le couvercle est fixé par les crochets (11). L'ensemble est introduit au four (fig 1F). Lorsque le pain est cuit, le couvercle est ôté et la caisse retournée pour démouler le pain. Le pain et la plaque sont incrustés et l'ensemble est laissé à température ambiante jusqu'au refroidissement complet du pain (fig 1G).

## Revendications

1. Procédé d'élaboration de blocs de pain de grandes dimensions par formation d'un pâton et cuisson dudit pâton caractérisé en ce qu'il comprend:
- une ou plusieurs opérations de laminage de la pâte
- un enroulage de la pâte en cylindre sur un rouleau (4)
- une opération de découpage du cylindre de pâte pour obtenir un bloc (6)
- une opération de pressage du bloc de pain dans un moule
- une phase de cuisson du bloc sur une plaque (14) dans le moule (7)
- une phase refroidissement du bloc de pain sur la plaque (14).

2. Moule pour l'obtention de blocs de pain de grandes dimensions caractérisé par:
- une enceinte comportant un fond et des parois latérales, formant une caisse parallélépipédique (8) ouverte en son extrémité supérieure
- un couvercle (10) de fermeture de la caisse
- un système de verrouillage (11) du couvercle sur la caisse
- une plaque trouée (14) reposant sur le fond de la caisse
- des pastilles (16) soudées au fond de la caisse permettant de rehausser la plaque (14).

3. Moule selon la revendication 2, caractérisé en ce que le fond de la caisse est pourvu de trous (9) permettant l'évacuation de la pression lors de la levée de la pâte pendant la cuisson et facilitant le démoulage.

4. Moule selon la revendication 2, caractérisé en ce que le couvercle (10) est pourvu d'un rebord s'emboîtant aux parois latérales de la caisse.

5. Moule selon la revendication 2, caractérisé en ce que le couvercle (10) est percé de petits trous (18) permettant l'évacuation des gaz lors de la levée de la pâte.

6. Moule selon la revendication 2, caractérisé en ce que les trous (15) de la plaque (14) sont chanfreinés sur l'envers de la plaque et dimensionnés pour permettre à la pâte de s'y incruster.

7. Moule selon la revendication 2 caractérisé en ce que les trous (9) du fond de la caisse et les trous (15) de la plaque ne concordent pas.

8. Moule selon la revendication 2 caractérisé en ce que le verrouillage du couvercle sur la caisse est assuré par des crochets (11), pouvant être maintenus en position fermée deux à deux par une tringle (17).

## Patentansprüche

1. Verfahren zur Herstellung von großen Kastenbroten durch Formen eines Teigblocks und Backen dieses Blocks, dadurch gekennzeichnet, dass es folgende Arbeitsschritte umfasst:
- einen oder mehrere Arbeitsgänge zum Auswalzen des Teigs
- das Aufrollen des Teigs in Zylinderform auf eine Rolle (4)
- das Zerschneiden des Teigzylinders, um einen Block (6) zu erhalten
- das Einpressen des Brotblocks in eine Form (7)
- das Backen des Brotes in der Form (7) auf einem Blech (14)

2. Form zum Backen von großen Kastenbroten, gekennzeichnet durch:
- eine Backform mit einem Boden und Seitenwänden, die einen nach oben offenen Kasten in Form eines Parallelepipeds (8) bilden
- einen Deckel (10) zum Verschließen der Kastenform
- ein Verriegelungssystem (11) zum Befestigen des Deckels auf der Form
- ein auf dem Boden der Form liegendes gelöchertes Blech (14)
- auf dem Boden der Form aufgeschweissten Plättchen (16) zum Erhöhen des Blechs (14)

3. Backform gemäß Anforderung 2, dadurch gekennzeichnet, dass der Boden der Form mit Löchern (9) versehen ist, um den während des Aufgehens des Teiges beim Backen entstehenden Druck entweichen zu lassen und die Entnahme des Brots aus der Form zu erleichtern.

4. Backform gemäß Anforderung 2, dadurch gekennzeichnet, dass der Deckel (10) mit einem Rand versehen ist, die die Seitenwände der Kastenform genau umschließt.

5. Backform gemäß Anforderung 2, dadurch gekennzeichnet, dass der Deckel (10) mit kleinen Löchern (18) versehen ist, um die beim Aufgehen des Teiges entstehenden Gase entweichen zu lassen.

6. Backform gemäß Anforderung 2, dadurch gekennzeichnet, dass die Löcher (15) in dem Blech (14) auf der Unterseite des Blechs abgeschrägt und so ausgelegt sind, dass der Teig sie ausfüllen kann.

7. Backform gemäß Anforderung 2, dadurch gekennzeichnet, dass die Löcher (9) im Boden der Form nicht mit den Löchern (15) im Blech übereinstimmen.

8. Backform gemäß Anforderung 2, dadurch gekennzeichnet, dass die Verriegelung des Deckels auf der Backform durch Haken (11) erfolgt, die jeweils zu zweit durch eine Stange (11) in geschlossener Position gehalten werden.

## Claims

1. Process for elaborating high-size bread blocks through the forming of a paste lump and the baking of said paste lump featured by the fact that it consists of:
- one or more paste rolling operations
- a paste winding motion in cylinder configuration over a roll (4)
- a cutting operation of the paste cylinder so as to obtain a block (6)
- a bread-block pressing operation in a mould
- a block baking phase over a plate (14) in the mould (7)
- a bread-block cooling phase over the plate (14).

2. Mould for obtaining high-size bread blocks featured by:
- an enclosure with a bottom section and side walls forming a parallelepiped box (8) opened at its top section
- a box closing cover (10)
- a cover locking device (11) over the box
- a plate (14) with holes in it resting on the box bottom section
- blocks (16) welded at the box bottom section helping raise the plate (14).

3. Mould according to claim 2, featured by the fact that the box bottom section is provided with holes (9) helping exhaust the pressure on paste raising during the baking and facilitating the removal from mould.

4. Mould according to claim 2, featured by the fact that the cover (10) is provided with a flange fitting together at box side walls.

5. Mould according to claim 2, featured by the fact that the cover (10) is pierced with small holes (18) allowing gases to exhaust on paste raising.

6. Mould according to claim 2, featured by the fact that the holes (15) of plate (14) are chamfered over the plate opposite side and dimensioned to enable the paste to become imbedded thereto.

7. Mould according to claim 2, featured by the fact that the holes (9) of box bottom section and plate holes (15) do not coincide.

8. Mould according to claim 2, featured by the fact that the cover locking device over the box is provided by hooks (11) which can be maintained in closed position in pairs by a rod (17).
